# EUROPÄISCHE PATENTANMELDUNG

(11) **EP 2 455 623 A1**
(43) Veröffentlichungstag der Anmeldung: **23.05.2012**
(21) Anmeldenummer: 11187561.3
(22) Anmeldetag: 02.11.2011
(51) Int. Cl.: F16B 5/02

(54) **Vorrichtung zum verspannenden Verbinden von mit Abstand hintereinander liegenden Bauteilen**

(30) Priorität: 19.11.2010 DE 102010051923
(71) Anmelder: EJOT GmbH & Co. KG, 57334 Bad Laasphe (DE)
(72) Erfinder: Baumbach, Gerald, 99891 Tabarz (DE)
(74) Vertreter: Bardehle, Heinz

(57) **Zusammenfassung**

Vorrichtung zum verspannenden Verbinden von mit Abstand voneinander liegenden Bauteilen (6/4, 7/5) mit einer ein oberes und ein folgendes unteres Bauteil (4, 5) durchsetzenden, selbstfurchenden Schraube (1) und mit in die Bauteile (4, 5) eingreifendem Schraubengewinde. Das obere Bauteil (4) ist durch in Aussparungen (9) im unteren Bauteil (5) aufgenommene Längsleisten (8) verlängert und der Schraube (1) ein Vorlaufbolzen (2, 11, 13, 16) vorgesetzt, den die Schraube (1) bei ihrem Eindrehen verschiebt. Der Vorlaufbolzen hält sich bei Rückdrehen der Schraube (1) in seiner verschobenen Lage dadurch, dass ein von dem verschobenen Vorlaufbolzen (2, 11, 13, 16) aktiviertes Verbindungselement (3, 12) eine Verbindung zwischen dem unteren Bauteil (5) und den Längsleisten (8) bewirkt. Dabei werden beide Bauteile (5, 8) in dem bestehenden Abstand festgehalten.

## Beschreibung

Bei der Verbindung zweier Bauteile, zum Beispiel zweier mit Abstand von einander angeordneten Platten besteht häufig das Problem, für irgendwelche Reparaturarbeiten diese Verbindung kurzzeitig zu lösen und nachträglich wiederherzustellen, wobei gewährleistet sein muss, dass der anfangs durch diese Verbindung festgelegte Abstand der beiden Bauteile bei deren Wiederverbindung eingehalten wird. Hierzu kann man Abstandsstücke vorsehen, die beim Verbinden der beiden Teile zwischen diese eingespannt und beim Wiederverbinden der beiden Teile zwischen diese wieder eingesetzt werden. Vorläufig ergibt sich dabei das Problem, dass der zwischen diesen beiden Bauteilen einzuhaltende Abstand sich erst bei deren Montage ergibt. Wenn zum Beispiel der Scheinwerfer eines Automobils an der Karosserie befestigt wird, so ist dabei häufig zwischen den betreffenden Karossieteilen und einer Fassung des Scheinwerfers ein bestimmter Abstand einzuhalten, der allerdings häufig von Automobil zu Automobil auch des gleichen Typs schwankt, was auf entsprechende unvermeidbare Ungenauigkeiten der betreffenden Karosserie-Stellen zurückzuführen ist (Toleranzen). In einem solchen Fall müssten verschiedene Abstandsstücke zur Verfügung stehen, die dann jeweils passend zu dem betreffenden Automobil einzusetzen wären, was insbesondere für Reparaturen eine erhebliche Belastung darstellt, da in einem solchen Fall jeweils eine größere Anzahl von Abstandsteilen zur Verfügung stehen müsste, um dann je nach Automobil entsprechend eingesetzt werden zu können.

Der Erfindung liegt die Aufgabe zugrunde, eine Vorrichtung zum verspannenden Verbinden von mit Abstand voneinander liegenden Bauteilen mit einer ein oberes und ein folgendes unteres Bauteil durchsetzenden, selbstfurchenden Schraube und mit in die Bauteile eingreifenden Schraubengewinde zu schaffen, wobei bei der Herstellung der Verbindung durch die beide Bauteile durchdringende Schraube der jeweils bei dem betreffenden Anwendungsfall gegebene Abstand automatisch eingestellt und eingehalten wird, so dass nach Entfernen und Wiedereinsetzen der beiden Bauteile durch das Wiedereindrehen der Schraube automatisch ohne Hinzufügen irgendeines Abstandstücks der richtige Abstand zwischen den beiden Bauteilen automatisch wieder eingestellt wird. Gelöst wird das Problem dadurch, dass das obere Bauteil durch in Aussparungen im unteren Bauteil aufgenommene Längsleisten verlängert und der Schraube ein Vorlaufbolzen vorgesetzt ist, den die Schraube bei ihrem Eindrehen verschiebt und der bei Rückdrehen der Schraube sich in seiner verschobenen Lage dadurch hält, dass ein von dem verschobenen Vorlaufbolzen aktiviertes Verbindungselement eine Verbindung zwischen dem unteren Bauteil und den Längsleisten derart bewirkt, dass beide Bauteile in dem bestehenden Abstand festgehalten sind.

Aufgrund der von dem oberen Bauteil ausgehenden und in das untere Bauteil hineinragenden Längsleisten ergibt sich ein Überlappungsbereich von Bestandsteilen der beiden Bauteile, in den bei Eindrehen der Schraube der Vorlaufbolzen von der Schraube hineingeschoben wird und in der erreichten Lage der hergestellten Verbindung zwischen den beiden Bauteilen verbleibt, wobei durch seine Lage im Überlappungsbereich der Bestandteile der beiden Bauteile diese über das Verbindungselement festgehalten werden, das in die beiden Bestandteile eingreift und damit festhält, ohne dass ein Herausdrehen der Schraube hierauf irgendwelche Einwirkungen auslösen kann. Damit wird der bei dem Eindrehen der Schraube vorgefundene Abstand der beiden Bauteile festgehalten, so dass an den Bauteilen irgendwelche Manipulationen vorgenommen werden können, ohne dass sich der durch den Einfluss des Vorlaufbolzens festgelegte Abstand der beiden Bauteile ändern kann.

Für die Wirkungsweise des Vorlaufsbolzens gestaltet man diesen vorteilhaft derart, dass der Vorlaufbolzen von der Schraube bei deren Eindrehen über ein Eingreifteil in ihre Stirnseite und ein Mitnahmeteil am Vorlaufbolzen verschoben wird, wobei das Verbindungselement eine Verbindung zwischen dem unteren Bauteil und Längsleisten erstellt, die beide Bauteile in dem bestehenden Abstand festhält. Dabei kann als Verbindungselement eine Reibungsoberfläche dienen, die zwischen den Längsleisten und dem unteren Bauteil durch benachbarte Zähne zur Wirkung kommt und die bei eingedrehter Schraube und entsprechend verschobenem Vorlaufbolzen das gegenseitige Eindringen von Längsleisten und unterem Bauteil bewirkt. Wenn dann die Schraube zurückgedreht wird, dann sorgt die Reibungsoberfläche mit den in das jeweilige Gegenstück eingedrungenen Zähnen dafür, dass sich die beiden Bauteile auch bei zurückgedrehter Schraube nicht axial gegeneinander verschieben können, womit der zunächst eingestellte Abstand auch bei zurückgedrehter Schraube erhalten bleibt. Dabei ist es möglich, die Zähne der Reibungsoberfläche entweder auf der Außenfläche des Vorlaufbolzens anzubringen, es ist aber auch möglich, die Reibungsoberfläche so zu gestalten, dass die Zähne auf dem die Längsleisten tragenden Grund der Aussparungen angebracht sind, wo sie dann gegenüber dem unteren Bauteil zur Wirkung kommen.

Als Verbindungselement kann ein Gewinde dienen, das die gleiche Steigung wie das Gewinde der Schraube aufweist, so dass beim Eindrehen der Schraube und dem Vorschieben des Vorlaufbolzens durchgehend ein Gewinde in die beiden Bauteile eingefurcht wird, das stufenlos sich über beide Bauteile erstreckt. In dem Bereich der Überlappung der Bestandteile der beiden Bauteile sitzt dann mit seinem Gewinde der Vorlaufbolzen in beiden Bestandteilen und hält diese in ihrem Abstand fest, so dass die Schraube aus den beiden Bauteilen herausgedreht werden kann, ohne dass diese sich in deren Längsrichtung voneinander verschieben können, da das Gewinde des Vorlaufbolzens in die beiden Bestandteile der beiden Bauteile eingreift und diese in ihrer Abstandlage festhält.

Eine andere Möglichkeit der oberflächigen Gestaltung des Vorlaufbolzens besteht darin, diesem als Verbindungselement eine durch benachbarte Zähne aufgeraute Reibungsoberfläche zu geben, die bei eingedrehter Schraube und entsprechend verschobenem Vorlaufbolzen sowohl in das untere Bauteil als auch in die Längsleisten eingreift. Hierdurch wird ähnlich wie bei der vorstehend beschriebenen Gewindegestaltung auf dem Vorlaufbolzen erreicht, dass die betreffenden Bestandteile der beiden Bauteile über die Reibungsoberfläche in dem Abstand gehalten werden, in dem sie sich beim Eindrehen der Schraube befinden.

Eine weitere Möglichkeit der Gestaltung des Verbindungselementes besteht darin, diese durch eine die Oberfläche des Vorlaufbolzens umgebende Klebstoffschicht zu bilden, die bei eingedrehter Schraube das untere Bauteil und die Längsleisten miteinander verbinden. In diesem Falle übernimmt also anstelle des oben beschriebenen Gewindes die Abstandseinhaltung die verhärtete Klebstoffschicht. Dabei wird zweckmäßig eine Klebstoffschicht mit einem Klebstoff verwendet, der beim Eindrehen des Vorlaufbolzens durch die Reibung aufgeweicht wird.

Für die Mitnahme des Vorlaufbolzens beim Eindrehen der Schraube gibt man der Berührungsstelle der Vorderseite der Schraube und der von der Schraube vorgeschobenen Stirnseite des Vorlaufbolzens eine solche Gestaltung, dass hierdurch die Mitnahme des Vorlaufbolzens beim Eindrehen der Schraube gewährleistet ist. Beim Rückdrehen der Schraube löst sich die Verbindung von Schraube und Vorlaufbolzen automatisch. Eine Möglichkeit der Gestaltung der Mitnahme besteht darin, das Eingreifteil nach Art einer Bohrerspitze und das Aufnahmeteil nach Art einer dazu passenden Vertiefung auszubilden, womit beim Verdrehen Eingreifteil und Mitnahmeteil sich miteinander verhaken und auf diese Weise der Vorlaufbolzen von dem beim Eindrehen der Schraube der Vorlaufbolzen entsprechend mitgenommen wird.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugzeichen verwendeten Begriffe und zugeordneten Bezugzeichen verwendet. In der Zeichnung bedeutet:
- Fig. 1a-e:: zwei Bauteile im unverspannten und verspannten Zustand jeweils mit Schnittbildern unter Verwendung eines Vorlaufbolzens mit Gewinde;
- Fig. 2:: zwei miteinander verbundene Bauteile mit einem durch eine Reibungsoberfläche gebildeten Verbindungselement am Vorlaufbolzen;
- Fig. 3:: zwei miteinander verbundene Bauteile mit einem durch eine Klebstoffschicht gebildeten Verbindungselement am Vorlaufbolzen;
- Fig. 4:: zwei miteinander verbundenen Bauteile mit einer Reibungsoberfläche zwischen dem Grund der die Längsleisten tragenden Aussparungen und dem in die Aussparungen eingeschobenen Längsleisten, und
- Fig. 5:: das Eingreifteil an der Stirnseite der Schraube und das entsprechende Mitnahmeteil am Vorlaufbolzen zur passenden Aufnahme des Eingreifteils.

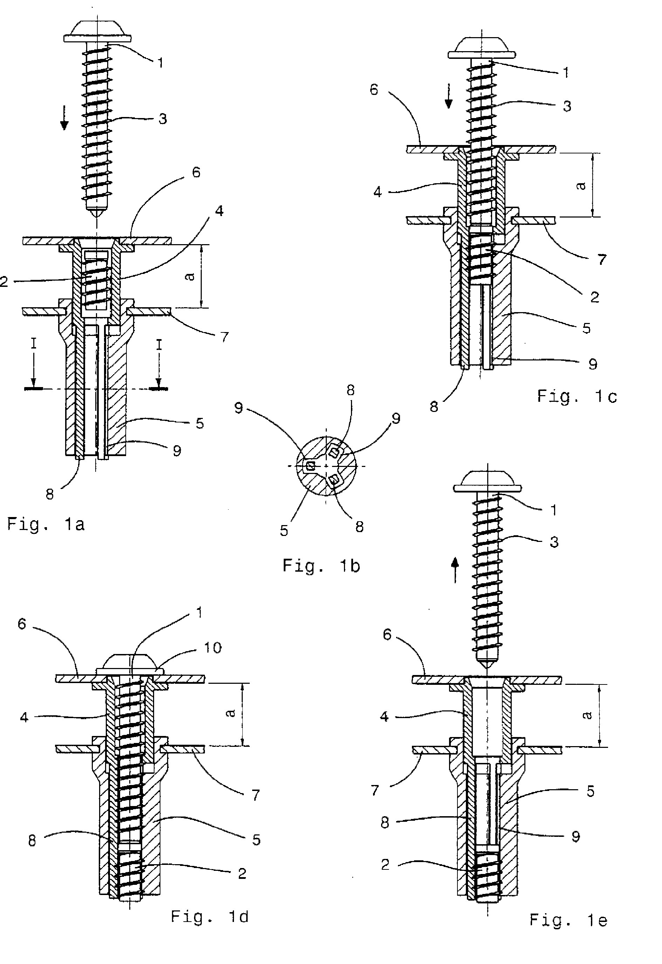

In den Figuren 1a bis 1e ist das Ausführungsbeispiel dargestellt, bei dem sowohl die Schraube 1 als auch der Vorlaufbolzen 2 mit einem selbstfurchenden Gewinde 3 versehen sind, das sich mit gleicher Steigung sowohl über die Schraube 1 als auch den Vorlaufbolzen 2 erstreckt, und zwar derart, dass sich im Falle des in der Figur 1c dargestellten Vorschiebens des Vorlaufbolzens 2 durch die Schraube 1 ein durchgehender Gewindeverlauf ergibt, also derart, dass im Falle der Verschiebesituation gemäß Figur 1d das Gewinde 3 auf der Schraube 1 und auf dem Vorlaufbolzen 2 als stufenlos durchgängiges Gewinde erscheint.

Durch die Schraube 1 werden das obere Bauteil 4 und das untere Bauteil 5 zusammengehalten, und zwar in dem mit a bezeichneten Abstand zwischen den Platten 6 und 7, die jeweils von dem oberen Bauteil 4 bzw. unteren Bauteil 5 getragen werden. Zwischen diesen beiden Platten 6 und 7 ist der Abstand a auch dann einzuhalten, wenn aus irgendeinem Grunde die Schraube 1 aus der in Figur 1a dargestellten Verbindung herausgeschraubt ist, wie dies in Figur 1 e dargestellt ist. In der Figur 1 e ist die Schraube 1 aus dem Verbund der beiden Bauteile 4 und 5 vollständig herausgeschraubt gezeichnet, so dass die Schraube 1 keine Wirkung mehr für den Zusammenhalt von Bauteil 4 und Bauteil 5 abgeben kann. Dieser Zusammenhalt wird durch den eingeschraubten Vorlaufbolzen 2 gewährleistet (siehe Fig. 1e).

Wie sich aus Figur 1a ergibt, ist das Bauteil 4 durch Längsleisten 8 in das untere Bauteil 5 hineinverlängert, wozu das untere Bauteil 5 mit entsprechenden Aussparungen 9 versehen ist, wie diese im Schnittbild gemäß Figur 1b dargestellt sind, die die in Figur 1a dargestellte Schnittlinie I-I wiedergibt.

Wie aus den Figuren 1a und 1c ersichtlich ist, wird von der Schraube 1 der Verlängerungsbolzen 2 von der Vorderseite der Schraube 1 mitgenommen und mitgedreht (auf das Mitdrehen wird weiter unten näher eingegangen), wobei Figur 1c den Zustand zeigt, in dem die Schraube 1 den Vorlaufbolzen 2 bereits in den Bereich des unteren Bauteils 5 vorgeschoben hat.

In Figur 1d ist die Endstellung der Schraube 1 dargestellt, die dabei mit ihrer Schulter 10 auf die Platte 6 drückt und mit ihrem Gewinde 3 das untere Bauteil 5 in dem gegebenen Abstand a festhält. In dieser Position ist der Verlaufbolzen 2 vollständig in den Bereich des unteren Bauteils 5 vorgeschoben.

Wenn nun aus irgendeinem Grund, zum Beispiel wegen einer Reparatur, die Schraube 1 aus dem Verbund von oberem Bauteil 4 und unterem Bauteil 5 herausgeschraubt ist, wie dies in Figur 1e dargestellt ist, dann verbleibt im Bereich des unteren Bauteils 5 der Vorlaufbolzen 2, der mit seinem Gewinde sowohl in die den Vorlaufbolzen 2 umgebenden Bereiche des unteren Bauteils 5 eingreift und gleichzeitig in die aus dem oberen Bauteil 4 herausragenden Längsleisten 8 eingedrungen ist, so dass sich über den eingedrehten Vorlaufbolzen 2 eine Verbindung zwischen dem unteren Bauteil 5 und den Längsleisten 8 ergibt, die als Bestandteil des oberen Bauteils 4 dessen Lage in Bezug auf das untere Bauteil 5 festhalten. Damit ist gewährleistet, dass der zwischen den Platten 6 und 7einzuhaltende Abstand a bzw. das verspannte Verbinden von oberem Bauteil 4 und unterem Bauteil 5 durch den eingeschraubten Vorlaufbolzen 2 festgehalten ist, der auch bei herausgeschraubter Schraube 1 in seiner Lage verbleibt, wie dies Figur 1e zeigt.

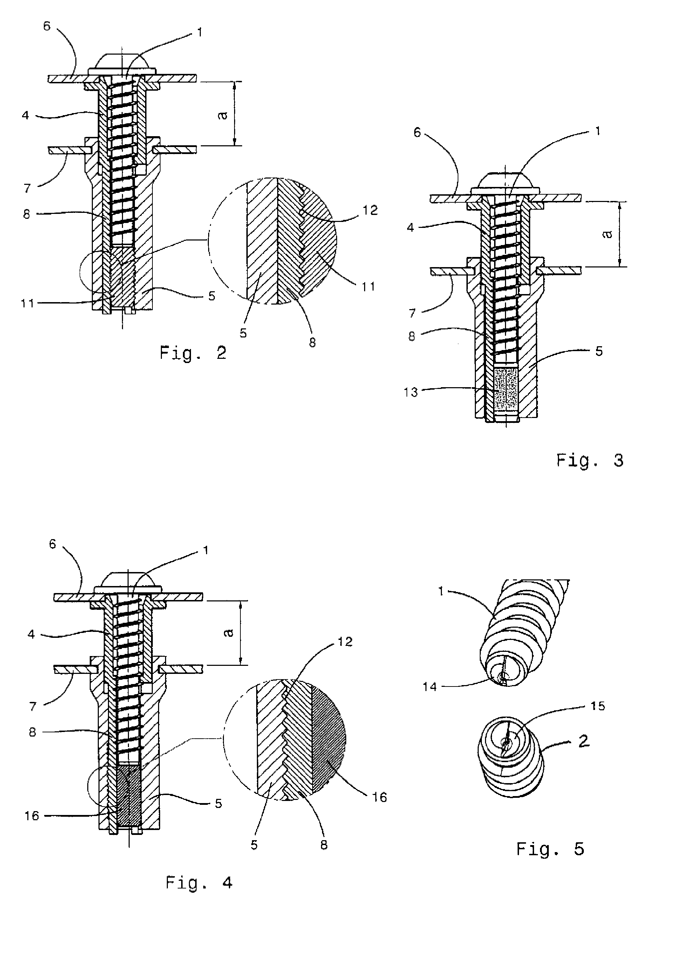

In der Figur 2 ist eine andere Möglichkeit der Gestaltung des Verbindungselementes dargestellt, wobei in dem strichpunktierten Kreis eine vergrößerte Darstellung des Verbindungselementes gezeigt ist, die hier aus einer durch Zähne 12 gebildeten Reibungsoberfläche besteht, die auf der Oberfläche des Vorlaufbolzens 11 aufgebracht ist. Die von Zähnen 12 gebildeten Reibungsoberfläche stellt eine Mitnahmeverbindung zwischen dem Vorlaufbolzen 11 und einer Längsleiste 8 dar, womit gewährleistet ist, dass der Vorlaufbolzen 11 auch bei zurückgedrehter Schraube 1 an seiner Stelle festgehalten ist und mit seinen Zähnen dann sich sowohl in die Längsleisten als auch in den neben den Längsleisten befindlichen Bereich des unteren Bauteils 5 eindringt und damit den Vorlaufbolzen 11 in der erreichten Stelle unabhängig vom Zurückdrehen der Schraube 1 festhält.

In der Figur 3 ist eine weitere Möglichkeit der Ausbildung des Verbindungselementes dargestellt, das hier aus einer auf den Vorlaufbolzen aufgebrachten Klebstoffschicht 13 besteht. Diese Klebstoffschicht hält den Vorlaufbolzen innerhalb des betreffenden Bereiches von Längsleisten 8 und unterem Bauteil fest, so dass der Vorlaufbolzen einerseits gesichert an der betreffenden Stelle festgehalten ist und dieser seinerseits die gegenseitige Verbindung von unterem Bauteil 5 und Längsleisten 8 und damit auf dem oberen Bauteil herbeiführt.

In der Figur 4 ist eine Variante der Gestaltung gemäß Figur 2 dargestellt. Gemäß Figur 4 besteht eine Reibungsoberfläche auf der Außenseite der Längsleisten 8, die sich gegen den Grund der die Längsleisten 8 aufnehmenden Aussparungen im unteren Bauteil 5 legen und damit unteres und oberes Bauteil bei eingedrungenen Zähnen gegen Verschieben sichern. Der hierfür erforderliche Druck in radialer Außenrichtung wird durch den sonst glatten Vorlaufbolzen 16 ausgeübt. In der durch den strichpunktiert gezeichneten Kreis eingeschlossenen Fläche ist die betreffende Reibungsoberfläche mit den Zähnen 12 deutlich herausgestellt.

Figur 5 zeigt eine Gestaltung von Eingreifteil 14 und Mitnahmeteil 15. Das Eingreifteil 14 ist unter anderem für die Verwendung beim Ausführungsbeispiel gemäß Figur 1 nach Art einer Bohrerspitze gestaltet, die sich in das Mitnahmeteil 15 am Vorlaufbolzen 2 eindrückt. Aufgrund dieser Gestaltung ist es möglich, dass sich bei Rückdrehen der Schraube 1 die durch Eingreifteil 14 und Mitnahmeteil 15 gebildete Verbindung automatisch löst, so dass das Zurückdrehen der Schraube 1 die Lage des Vorlaufbolzens 2 nicht beeinflusst.

### Bezugszeichenliste

- 1: Schraube
- 2: Vorlaufbolzen
- 3: Gewinde
- 4: Oberes Bauteil
- 5: Unteres Bauteil
- 6: Platte
- 7: Platte
- 8: Längsleisten
- 9: Aussparungen
- 10: Schulter
- 11: Vorlaufbolzen
- 12: Reibungsoberfläche
- 13: Klebstoffschicht
- 14: Bohrspitze
- 15: Aufnahmeteil
- 16: Vorlaufbolzen

## Patentansprüche

1. Vorrichtung zum verspannenden Verbinden von mit Abstand voneinander liegenden Bauteilen (6/4, 7/5) mit einer ein oberes und ein folgendes unteres Bauteil (4, 5) durchsetzenden, selbstfurchenden Schraube (1) und mit in die Bauteile (4, 5) eingreifendem Schraubengewinde (3), **dadurch gekennzeichnet, dass** das obere Bauteil (4) durch in Aussparungen (9) im unteren Bauteil (5) aufgenommene Längsleisten (8) verlängert und der Schraube (1) ein Vorlaufbolzen (2, 11, 13, 16) vorgesetzt ist, den die Schraube (1) bei ihrem Eindrehen verschiebt und der bei Rückdrehen der Schraube (1) sich in seiner verschobenen Lage dadurch hält, dass ein von dem verschobenen Vorlaufbolzen (2, 11, 13, 16) aktiviertes Verbindungselement (3, 12) eine Verbindung zwischen dem unteren Bauteil (5) und den Längsleisten (8) derart bewirkt, dass beide Bauteile (5, 8) in dem bestehenden Abstand festgehalten sind.

2. Vorrichtung nach Anspruch 1, **dadurch gekennzeichnet, dass** der Vorlaufbolzen (2, 11, 13) von der Schraube (1) bei deren Eindrehen über ein Eingreifteil (14) in ihrer Stirnseite und ein Mitnahmeteil (15) am Vorlaufbolzen verschoben wird, wobei das Verbindungselement (3) eine Verbindung zwischen dem unteren Bauteil (5) und Längsleisten (4) erstellt, die beide Bauteile in dem bestehenden Abstand festhält.

3. Vorrichtung nach Anspruch 2, **dadurch gekennzeichnet, dass** das Verbindungselement (3) durch ein Gewinde (17) auf dem Vorlaufbolzen (2) gebildet ist, das die gleiche Steigung wie das Gewinde (3) der Schraube (1) aufweist und das Gewinde (3) sowohl in das untere Bauteil (5) als auch die Längsleisten (8) derart eingreift, das beide Bauteile (5, 8) in dem bestehenden Abstand festgehalten sind

4. Vorrichtung nach Anspruch 1 oder 2, **dadurch gekennzeichnet, dass** das Verbindungselement aus einer den Vorlaufbolzen (11) umfassenden, durch benachbarte Zähne aufgerauten Reibungsoberfläche (12) besteht, die bei eingedrehter Schraube (1) und entsprechend verschobenem Vorlaufbolzen (11) sowohl in das untere Bauteil (5) als auch in die Längsleisten (8) eingreift.

5. Vorrichtung nach Anspruch 1 oder 2, **dadurch gekennzeichnet, dass** das Verbindungselement durch eine die Oberfläche des Vorlaufbolzens umgebende Klebstoffschicht (13) gebildet ist, die bei eingedrehter Schraube (1) das untere Bauteil (5) und die Längsleisten (8) miteinander verbindet.

6. Vorrichtung nach Anspruch 5, **dadurch gekennzeichnet, dass** die Klebstoffschicht (13) einen Heißkleber enthält, der beim Eindrehen des Vorlaufbolzens durch Reibung aufgeweicht wird.

7. Vorrichtung nach Anspruch 2, **dadurch gekennzeichnet, dass** das Eingreifteil (14) nach Art einer Bohrerspitze und das Mitnahmeteil (15) nach Art einer dazu passenden Ausnehmung (15) ausgebildet ist.

8. Vorrichtung nach Anspruch 1, **dadurch gekennzeichnet, dass** zwischen den Längsleisten (8) und dem unteren Bauteil (5) eine durch benachbarte Zähne aufgeraute Reibungsoberfläche (12) besteht, die bei eingedrehter Schraube (1) und entsprechend verschobenem Vorlaufbolzen (11) ein gegenseitiges Eindringen von Längsleisten (8) und unterem Bauteil (5) bewirkt.

9. Vorrichtung nach Anspruch 8, **dadurch gekennzeichnet, dass** die Zähne auf der Außenfläche des Vorlaufbolzens (11) angebracht sind.

10. Vorrichtung nach Anspruch 8, **dadurch gekennzeichnet, dass** die Zähne auf dem die Längsleisten (8) tragenden Grund der Aussparungen (9) angebracht sind.
